# EUROPEAN PATENT SPECIFICATION

(11) **EP 3 672 065 B1**
(45) Date of publication and mention of the grant of the patent: **29.05.2024**
(21) Application number: 18213591.3
(22) Date of filing: 18.12.2018
(51) Int. Cl.: H02P 25/22

(54) **INVERTER ASSEMBLY FOR AN ELECTRIC MACHINE, ARRANGEMENT WITH AN ELECTRIC MACHINE AND THE INVERTER ASSEMBLY, METHOD FOR OPERATING AN ELECTRIC MACHINE AND COMPUTER PROGRAM**
WECHSELRICHTERANORDNUNG FÜR EINE ELEKTRISCHE MASCHINE, ANORDNUNG MIT EINER ELEKTRISCHEN MASCHINE UND DER WECHSELRICHTERANORDNUNG, VERFAHREN ZUM BETREIBEN EINER ELEKTRISCHEN MASCHINE UND COMPUTERPROGRAMM
ENSEMBLE ONDULEUR POUR UNE MACHINE ÉLECTRIQUE, AGENCEMENT COMPORTANT UNE MACHINE ÉLECTRIQUE ET UN ENSEMBLE ONDULEUR, PROCÉDÉ POUR FAIRE FONCTIONNER UNE MACHINE ÉLECTRIQUE ET PROGRAMME INFORMATIQUE

(43) Date of publication of application: 24.06.2020
(73) Proprietor: Valeo eAutomotive Germany GmbH, 91056 Erlangen (DE)
(72) Inventor: Ebersberger, Sebastian, 91052 Erlangen (DE); Walter, Andreas, 90411 Nürnberg (DE); Köpken, Hans-Georg, 91056 Erlangen (DE)

(56) References cited:
- EP-A1- 3 118 990
- DE-A1-102013 205 869
- US-A1- 2012 161 689
- US-A1- 2014 009 093
- US-A1- 2015 061 567
- LUO ZHANQIANG ET AL: "Modelling of dual three-phase permanent magnet brushless machine and drive using matrix and tensor approach", IET ELECTRIC POWER APPLICAT, IET, UK, vol. 9, no. 1, January 2015 (2015-01), pages 30-43, XP006050653, ISSN: 1751-8660, DOI: 10.1049/IET-EPA.2014.0064
- WENPING CAO ET AL: "Overview of Electric Motor Technologies Used for More Electric Aircraft (MEA)", IEEE TRANSACTIONS ON INDUSTRIAL ELECTRONICS., vol. 59, no. 9, September 2012 (2012-09), pages 3523-3531, XP055581717, USA ISSN: 0278-0046, DOI: 10.1109/TIE.2011.2165453

## Description

The present invention refers to an inverter assembly for an electric machine. Besides, the present invention relates to an arrangement with an electric machine and an inverter assembly and a method for operating an electric machine.

US 2014/0009093 A1 discloses a power steering apparatus in a vehicle with an actuator including a three-phase brushless motor and an ECU acting as a control unit for driving the motor. The ECU includes a control section and an inverter section serving as an electrical power converter that controls electrical power supply to the motor. The control section controls the inverter section based on a vehicle speed signal and a steering torque signal. The inverter section includes a first-system inverter provided to a first winding set of the motor and a second-system inverter provided to a second winding set of the motor.

US 2012/0161689 A1 discloses a driving apparatus for assisting power for a steering operation of a vehicle. The apparatus comprises a brush-less type motor and a controller supplying the motor with three-phase alternating current so that the motor is rotated in the forward or backward direction. A power portion of the controller comprises a first and a second inverter circuit. The electric motor has a rotor and a stator with a first winding system supplied from the first inverter circuit and a second winding system supplied from the second inverter circuit. Control signals are inputted into the first and second inverter circuits.

The article by Luo Shanqiang et al.: "Modelling of dual three-phase permanent magnet brushless machine and drive using matrix and tensor approach", IET Electric Power Applications, IET, UK, vol. 9, no. 1 of January 1, 2015, pp. 30-43, discloses a dual three-phase permanent magnet brushless machine (DTPPMBLM) in the field of electrically powered actuation systems in aviation. The DTPPMBLM is a dual Y three-phase electric machines, which consists of two sets of three-phase armature windings. The windings are driven by two independent sets of power electronic circuits with dual control channels. A controller structure is provided, in which a rotational speed reference (command) value ω_{ref} is provided to both control channels, each of which controls one of the power converters.

EP 3 118 990 A1 discloses a motor control device capable of detecting a short-circuit failure of at least one of a motor current blocking unit and a power source blocking unit for an electric power steering device.

The article by Wenping Cao et al.: "Overview of Electric Motor Technologies Used for More Electric Aircraft (MEA)", IEEE Transactions on Industrial Electronics, vol. 59, no. 9 of September 1, 2012, pp. 3523-3531 discloses landing gear nose wheel steering system, which uses a dual three-phase permanent magnet (PM) motor and comprises a gearbox and a clutch.

The patent application publication DE 1 02013205869A1 discloses an electric motor drive of drive train of a vehicle having a controller, two inverters driving two separate three-phase motor windings to have the electric motor rotate in different directions and a smoothing capacitor.

Electric machines for driving a vehicle with separated winding systems supplied with multiphase AC currents provided by an inverter assembly are generally known. In some operation cases it is necessary to dissipate energy from the electric machine without feeding back energy to a DC voltage source supplying a DC link of the inverter assembly. Such a case may be a discharge of a smoothing capacitor of the DC link, which has been disconnected from the DC voltage source.

It is known to use an additional resistor, which is connected in parallel to the DC link for converting energy stored into the electric machine into heat. However, such a resistor is costly, requires space and the converted heat has to be dissipated.

Furthermore, it is known to control the electric machine to provide a high d-current in order to dissipate energy stored in the winding systems. However, high negative d-currents can be harmful for the electric machine and demagnetize permanent magnets of the electric machine. Furthermore, a high positive d-current requires a high DC voltage and cannot be used at high speeds.

Thus, it is an object of the present invention to provide an improved possibility to dissipate energy from an electric machine having multiple winding systems without feeding back energy to a DC voltage source.

According to a first aspect of the present invention, the above object is solved by an inverter assembly according to claim 1. According to a second aspect of the invention, the above object is solved by an arrangement according to claim 10. The invention is further defined by a method according to claim 12.

Preferred embodiments of the invention are defined by the dependent claims.

The invention is based upon the consideration that, particularly kinetic a magnetic, energy stored in the electric machine may be efficiently dissipated by controlling the power section to provide torques in different directions, i.e. one winding system provides a torque in a forward driving direction and one winding system provides torque in a backward driving direction or vice versa.

Advantageously, the inverter assembly according to the invention allows energy dissipation at all operating points of the electric machine, particularly at all levels of a DC link voltage and at all rotation speeds. As it uses d-currents as well as q-currents, the electric machine can be operated at a maximum current operating point, particularly without demagnetizing permanent magnets in the case of the electric machine being a permanent excited electric machine. Furthermore, at a maximum torque per current (MTPC) operating point the inventive dissipation strategy is robust against resolver angle failure in comparison to applying a d-current only. Besides, no additional hardware like a resistor for converting the energy into heat is required. Thus, the inventive inverter assembly allows dissipating energy stored in the electric machine with lower effort and more efficiently because a limitation of negative d-currents to protect permanent magnets can be omitted.

Typically, the AC currents are decoupled inside the electric machine. Preferably, each multiphase AC current is a three-phase AC current. Particularly, the control unit is configured to control the power sections to provide the multiphase AC currents causing a torque of both winding systems in one of the directions in a normal operation mode, wherein the control unit may be configured to put the electric machine into a dissipation operating mode, in which the winding systems are controlled to provide the torques with the different directions, upon receiving the request signal. Typically, the control unit is configured to control the power sections to provide the AC currents with the same magnitude.

It is possible that the request signal is obtained at an input of the inverter assembly. With regard to the first aspect of the invention, the inverter assembly further comprises a second control unit that is configured to generate the request signal. The other control unit which is configured to control the power sections to provide the multiphase AC currents may therefore be regarded as the first control unit.

When the second control unit is configured to detect a failure state of the inverter assembly and/or the electric machine and to generate the request signal upon detecting the failure state, wherein the inverter assembly is configured to discharge a smoothing capacitor of the DC link when providing the multiphase AC currents causing the torques in opposite directions, the inverter assembly may detect a necessity to dissipate energy for discharging the smoothing capacitor itself, particularly because of an error of one of the power sections.

If braking the electric machine is desired but a power dissipation by feeding back energy stored in the electric machine is not possible, it is useful that the second control unit is configured to generate the request signal depending on an operation request signal representing a torque to be provided by the electric machine or a rotational speed to be provided by the electric machine and a maximum power feedback signal representing a maximum electric power feedback to a battery connectable or connected to the DC link and, optionally, an allowance signal indicating that generating the request signal is allowed. Thus, the torque or rotational speed represented by the operation request signal may be reached faster since the electric machine brakes during the power dissipation that is realized when the request signal is provided to the first control unit. Typically, the operation request signal and/or the maximum power feedback signal and/or the allowance signal are obtainable at an input of the inverter assembly. Particularly, the first control unit may be configured to control the power sections based on the operation request signal in the normal operation mode.

Particularly, the second control unit is configured to estimate a power feedback to the battery for reducing an actual torque of the electric machine to the torque represented by the operational signal or to a torque provided by the electric machine when the rotational speed represented by the operational signal is provided, to perform a comparison of the estimated power feedback with the maximum electric power feedback to the battery represented by the maximum power feedback signal and to generate the request signal based on the comparison.

According to a further aspect of the invention, the above object is solved by an arrangement according to claim 4.

Preferably, the first winding system is arranged on a side of a sectional plane extending in axial and radial direction and the second winding system is arranged on the other side of the sectional plane.

Furthermore, the electric machine may be part of or adapted to be part of a drive train of a vehicle.

Preferably, the inverter assembly is configured to be coupled to a control device of the vehicle for data transfer. The control device may be formed by one or multiple electric control units (ECU). Typically, the data transfer is realized by a bus system of the vehicle. The control device may be configured to provide the request signal and/or the torque reduction signal and/or the maximum power feedback signal and/or the allowance signal.

The failure state of the vehicle detected by the control device may be an accident of the vehicle that requires to discharge electrically conducting parts of the arrangement below a permissible touch voltage, e.g. of 60 volts. Typically, the vehicle comprises a breaking unit, e.g. a contactor, that is interconnected between a battery and the DC link and configured to open upon receiving the request signal.

Apart from discharging the smoothing capacitor, dissipating energy from the electric machine without feeding back the energy to the DC voltage source is usable in further cases that do not relate to the failure state or other malfunctions:
Exemplarily, the arrangement comprises a clutch, wherein the allowance signal is received upon detecting that the clutch is to be opened. This may refer to a case, in which a clutch for coupling the electric machine and a combustion engine of the vehicle is to be opened and the electric machine has to be braked to realize opening the clutch. Alternatively, the allowance signal may be received upon detecting that the electric machine has to be braked for reaching a synchronization speed. This may refer to a case, in which the rotational speed has to be reduced during gear shifting. In both cases dissipating the energy stored in the electric machine allows faster braking the electric machine although feeding back energy to the battery, e.g. due to the battery being fully charged is not possible or undesired.

Particularly, the arrangement comprises a gearbox couplable to the electric machine via the clutch or a combustion engine, wherein the electric machine is couplable to a mechanic load via the clutch, particularly being a claw pole clutch.

According to a further aspect of the invention, the above object is solved by a method according to claim 12.

All statements referring to the inventive inverter assembly and the inventive arrangement apply analogously to each other and to the inventive method. Further details and advantages of the present invention are disclosed in the following description of embodiments, wherein reference is made to the drawings. These are schematic illustrations and show:
- Fig. 1: a block diagram of an embodiment of the arrangement according to the invention comprising an embodiment of the inverter assembly according to the invention;
- Fig. 2: a block diagram of a vehicle, comprising an embodiment of an arrangement according to the invention with a gearbox; and
- Fig. 3: a block diagram of a further vehicle, comprising an embodiment of an arrangement according to the invention.

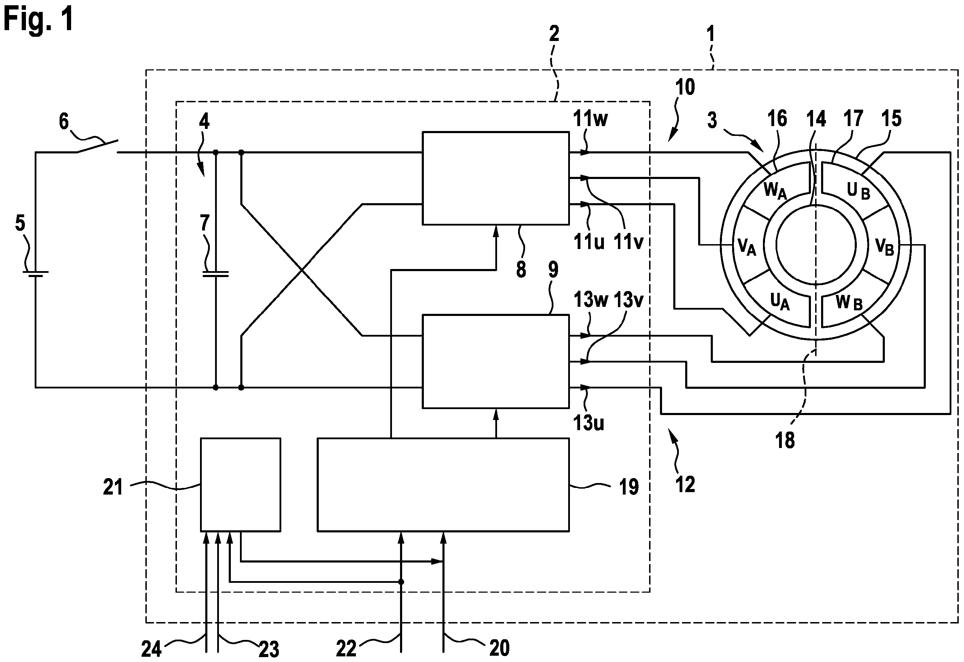

Fig. 1 is a block diagram of an embodiment of an arrangement 1, comprising an inverter assembly 2 and an electric machine 3.

The inverter assembly 2 comprises a DC link 4, which is connected to a DC voltage source formed by a battery 5 via a breaking unit 6 formed by a contactor. For smoothing a DC voltage supplied to the DC link 4, the inverter assembly 2 comprises a smoothing capacitor 7. Besides, the inverter assembly 2 comprises a first power section 8 and a second power section 9, which are connected in parallel to the DC link 4. The first power section 8 is configured to convert power supplied to the DC link 4 into a first multiphase AC current 10 comprising three phase currents 11u, 11v, 11w. Correspondingly, the second power section 9 is configured to convert the power supplied to the DC link 4 into the second multiphase AC current 12, comprising phase currents 13u, 13v, 13w. Thus, in the present embodiment, two sets of three-phase AC currents are provided. According to further embodiments, each multiphase AC current 10, 12 may comprise a higher number of phase currents.

The electric machine 3 comprises a rotor 14 and a stator 15, which includes a first winding system 16 and a second winding system 17 being separated from each other. The first winding system 16 is arranged on a side of a sectional plane 18 extending in axial and radial direction of the electric machine 3, whereas the second winding system 17 is arranged on the other side of the sectional plane 18. The first winding system 16 comprises phase windings U_{A}, V_{A}, W_{A} and the second winding system 17 comprises phase windings U_{B}, V_{B}, W_{B}, wherein the phase windings U_{A} and W_{B} on the one hand and the phase windings W_{A} and U_{B} on the other hand are arranged adjacent to each other. The first winding system 16 is supplied by the first AC current 10 of the first power section 8, wherein the phase winding U_{A} is supplied by the phase current 11u, the phase winding V_{A} is supplied by the phase current 11v and the phase winding W_{A} is supplied by the phase current 11w. Correspondingly, the second winding system 17 is supplied by the second multiphase AC current 12, wherein the phase winding U_{B} is supplied by the phase current 13u, the phase winding V_{B} is supplied by the phase current 13v and the phase winding W_{B} is supplied by the phase current 13w.

A first control unit 19 of the inverter assembly 2 is configured to control the power sections 8, 9 to provide the multiphase AC currents 10, 12 in a normal operation mode such that they cause a torque with both winding systems 16, 17 in the same direction, which may be a forward or a backward direction. Upon receiving a request signal 20 at an input of the inverter assembly 2, the first control unit 19 changes the electric machine from the normal operation mode into a dissipation operation mode, in which the first control unit 19 controls the first power section 8 to provide the first multiphase AC current 10 such that it causes a torque in a first direction and the second power section 9 to provide the second multiphase AC current 12 such that it causes a torque in a second direction being opposite to the first direction. Thus, the first winding system 16 may be controlled to generate a torque in the forward direction and the second winding system 17 may be controlled to generate torque in the backward direction or vice versa. The control strategy causes, particularly kinetic and magnetic, energy stored in the electric machine 3 to be dissipated without feeding back power to the DC link 4 or the battery 5, respectively.

The request signal 20 may be obtained from an external component or from a second control unit 21, which is configured to detect a failure state of the inverter assembly 2 and/or the electric machine 3. Such a failure state may requires a discharge of the smoothing capacitor 7.The request signal 20 may also trigger the breaking unit 6 to disconnect the battery 5 from the DC link 4 so that energy stored in the electric machine 3 cannot be fed back to the battery 5. By operating the electric machine 3 in the dissipation operation mode the multiphase AC currents 10, 12 represent d- and q-currents with a magnitude greater than zero, which dissipate the energy efficiently without producing undesired torque to the rotor 14 and without demagnetizing permanent magnets of the rotor 14.

Furthermore, the inverter assembly 2 may receive an operation request signal 22, a maximum power feedback signal 23 and an allowance signal 24 at the input. In the normal operation mode the first control unit 19 is configured to control power sections 8, 9 based on a setpoint value for a torque to be provided by the electric machine 3 represented by the operation request signal 22. Alternatively, the operation request signal 22 represents a rotational speed to be provided by the electric machine 3. Then the first control unit 19 determines a setpoint value for the torque that realizes the requested rotational speed. The maximum power feedback signal 23 represents a maximum electric power feedback to the battery 5 connected to the DC link 4. Thus, the maximum power feedback signal 23 depends on an actual state of charge of the battery 5, wherein at a high state of charge a lower power feedback is allowed than at a low state of charge.

The second control unit 21 is configured to generate the request signal 20 depending on the operation request signal 22 and/or the maximum power feedback signal 23 and/or the allowance signal 24. Said allowance signal 24 indicates that generating the request signal 20 is allowed. The second control unit 21 is configured to estimate a power feedback to the battery 5 for reducing an actual torque of the electric machine 3 to the torque represented by the operational signal 22 or to a torque provided by the electric machine 3 when the rotational speed represented by the operational signal 22 is provided. The second control unit 21 performs a comparison of the estimated power feedback with the maximum power feedback to the battery 3 represented by the maximum power feedback signal 23 and generates the request signal based on the comparison. Then, the request signal 20 is generated if the maximum power feedback is lower than the estimated power feedback, and potentially if the allowance signal 24 indicates allowance of generating the request signal 20.

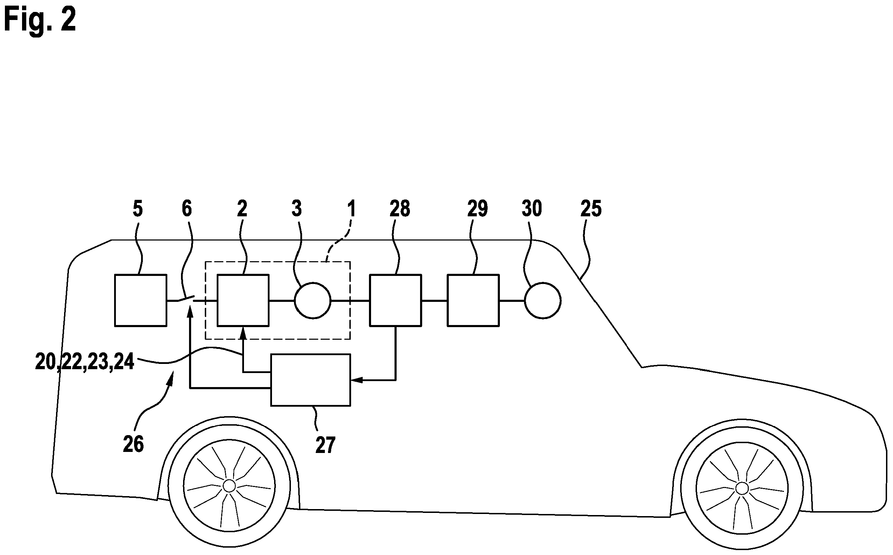

Fig. 2 is a block diagram of a first vehicle 25 being an electric vehicle. The vehicle 25 comprises an arrangement 1 corresponding to the afore-mentioned embodiment, a clutch 28 and a gearbox 29. The clutch 28 and the gearbox 29 are members of a drive train 26 of the vehicle 25. The drive train 26 further comprises the battery 5, the breaking unit 6, a control device 27 and a mechanic load 30. Therein, the clutch 28 is capable of coupling and decoupling the electric machine 3 with the gearbox 29 that is coupled to the mechanic load 30. The mechanic load 30 comprises a driving axle and wheels of the vehicle 25, exemplarily.

The control device 27 is configured to detect a failure state of the vehicle 25 that requires discharging the smoothing capacitor 7 of the DC link 4 and to provide the request signal 20 upon detecting the failure state.

Besides, the control device 27 is configured to provide the operation request signal 22 and the maximum power feedback signal 23 to the inverter assembly 2. When the control device 27 detects that in an open state of the clutch 28 the rotational speed of the electric machine 3 has to be reduced to reach a synchronization speed for gear shifting, the control device 27 provides the allowance signal 24. Thus, when the electric machine 3 has to be braked for reaching the synchronization speed represented by the operation request signal 22, the control unit 27 allows to switch to the dissipation mode. When the second control unit 21 (see Fig. 1) detects that the estimated power feedback is higher than the maximum power feedback, it switches to the dissipation mode and allows faster braking of the electric machine 3 until the synchronization speed is reached.

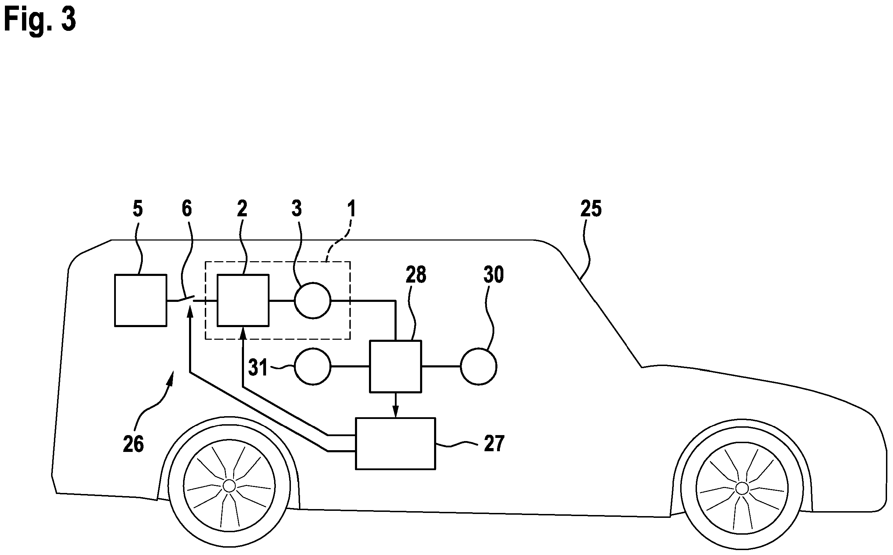

Fig. 3 is a block diagram of a further vehicle 25, wherein equivalent components are provided with identical reference signs with respect to Fig. 2.

The vehicle 25 is a hybrid vehicle, comprising the drivetrain 26 with an electric branch including the battery 5, the breaking unit 6 and the arrangement 1 and a combustion branch including a combustion engine 31. Via a claw pole clutch 28 the electric machine 3 is couplable to the mechanic load 30. In order to open the clutch 28 during a deceleration of the vehicle 25, it is necessary to decelerate the electric machine 3. In this case, the control device 27 of the vehicle 25 provides the allowance signal 24 and requests a suitable torque that allows opening the clutch 28 by means of the operation request signal 22. Thus, when the second control unit 21 (see Fig. 1) detects that the estimated power feedback is higher than the maximum power feedback, it switches to the dissipation mode and allows faster braking of the electric machine 3 for allowing the clutch 28 to be opened.

## Claims

1. Inverter assembly (2) for an electric machine (3), comprising
- a DC link (4),
- a first power section (8) configured to convert power supplied to the DC link (4) into a first multiphase AC current (10) for a first winding system (16) of the electric machine (3),
- a second power section (9) configured to convert the power supplied to the DC link (4) into a second multiphase AC current (12) for a second winding system (17) of the electric machine (3),
- a first control unit (19) that is configured to control, upon receiving a request signal (20), the first power section (8) to provide the first multiphase AC current (10) causing a torque in a first direction and the second power section (9) to provide the second multiphase AC current (12) causing a torque in a second direction being opposite to the first direction and
- a second control unit (21) that is configured to generate the request signal (20);
wherein the second control unit (21) is configured
- to detect a failure state of the inverter assembly (2) and/or the electric machine (3) and to generate the request signal (20) upon detecting the failure state, wherein the inverter assembly is configured to discharge a smoothing capacitor (7) of the DC link (4) when providing the multiphase AC currents (11, 12) causing the torques in opposite directions
and/or
- to generate the request signal (20) depending on a maximum power feedback signal (23) representing a maximum electric power feedback to a battery (5) connectable to the DC link (4).

2. Inverter assembly according to claim 1, wherein the second control unit (21) is configured to generate the request signal (20) depending on an allowance signal (24) indicating that generating the request signal (20) is allowed.

3. Inverter assembly according to claim 1 or 2, wherein the second control (21) unit is configured to generate the request signal in further dependency on an operation request signal (22) representing a torque to be provided by the electric machine (3) or a rotational speed to be provided by the electric machine (3) and to
- estimate a power feedback to the battery (5) for reducing an actual torque of the electric machine (3) to the torque represented by the operational signal (22) or to a torque provided by the electric machine (3) when the rotational speed represented by the operational signal (22) is provided,
- perform a comparison of the estimated power feedback with the maximum electric power feedback to the battery (5) represented by the maximum power feedback signal (23) and
- generate the request signal (20) based on the comparison.

4. Arrangement (1) comprising:
- an electric machine (3), comprising a rotor (14) and a stator (15) having a first winding system (16) and a second winding system (17) being separated from the first winding system (16) and
- an inverter assembly (2) according to any of claims 1 to 3.

5. Arrangement according to claim 4, wherein the electric machine (3) is part of or adapted to be a drive train (26) of a vehicle (25).

6. Arrangement according to claim 5, in which the inverter assembly (2) is configured to be coupled to a control device (27) of the vehicle (25) for data transfer.

7. Arrangement according to claim 6, wherein the control device (27) is configured to detect a failure state of the vehicle (25) and to provide the request signal (20) upon detecting the failure state for discharging the or a smoothing capacitor (7) of the DC link (4).

8. Arrangement according to claim 6 or 7, when being dependent on claim 2, furthermore comprising a clutch (28), and wherein the allowance signal (24) is received upon detecting that the clutch (28) is to be opened or that the electric machine (3) has to be braked for reaching a synchronization speed .

9. Arrangement according to claim 8, comprising a gear box (29) being couplable to the electric machine (3) via the clutch (28) or wherein the drive train (26) comprises a combustion engine (31), wherein the electric machine (3) is couplable to a mechanic load (30) via the clutch (28).

10. Arrangement (1) comprising:
- an electric machine (3) being part of or adapted to be a drive train (26) of a vehicle (25) and comprising a rotor (14) and a stator (15) having a first winding system (16) and a second winding system (17) being separated from the first winding system (16) and
- an inverter assembly (2) being configured to be coupled to a control device (27) of the vehicle (25) for data transfer and comprising: a DC link (4) with a smoothing capacitor (7), a first power section (8) configured to convert power supplied to the DC link (4) into a first multiphase AC current (10) for the first winding system (16), a second power section (9) configured to convert the power supplied to the DC link (4) into a second multiphase AC current (12) for the second winding system (17) and a control unit (19) that is configured to control, upon receiving a request signal (20), the first power section (8) to provide the first multiphase AC current (10) causing a torque in a first direction and the second power section (9) to provide the second multiphase AC current (12) causing a torque in a second direction being opposite to the first direction,
wherein the control device (27) is configured to detect a failure state of the vehicle (25) and to provide the request signal (20) upon detecting the failure state for discharging the smoothing capacitor (7).

11. Arrangement according to any of claims 4 to 10, wherein the first winding system (16) is arranged on a side of a sectional plane (18) extending in axial and radial direction and wherein the second winding system (17) is arranged on the other second side of the sectional plane (18).

12. Method for operating an electric machine (3) by an inverter assembly (2), the inverter assembly (2) comprising a DC link (4) with a smoothing capacitor (7), a first power section (8) configured to convert power supplied to the DC link (4) into a first multiphase AC current (10) for a first winding system (16) of the electric machine (3), a second power section (9) configured to convert the power supplied to the DC link (4) into a second multiphase AC current (12) for a second winding system (17) of the electric machine (3), a first control unit (19),
the method comprising:
- controlling, by means of the control unit (19) upon receiving a request signal (20) the first power section (8) to provide the first multiphase AC current (10) causing a torque in a first direction,
- controlling, by means of the first control unit (19) upon receiving the request signal (20), the second power section (9) to provide the second multiphase AC (12) current causing a torque in a second direction being opposite to the first direction, whereby energy stored in the electric machine (3) is dissipated,
the method further comprising
- the following steps carried out by a control device (27) of a vehicle (25) being coupled with the inverter assembly (2) for data transfer: detecting a failure state of a vehicle (25) and providing, upon detecting the failure state, the request signal (20) for discharging the smoothing capacitor (7), the electric machine (3) being part of a drive train (26) of the vehicle (25) and comprising a rotor (14) and a stator (15) having the first winding system (16) and the second winding system (17) being separated from the first winding system (16),
and/or
one or both of the following steps carried out by a second control unit (21) of the inverter assembly (2):
- detecting a failure state of the inverter assembly (2) and/or the electric machine (3) and generating the request signal (20) upon detecting the failure state, wherein the inverter assembly (2) is configured to discharge the smoothing capacitor (7) of the DC link (4) when providing the multiphase AC currents (11, 12) causing the torques in opposite directions;
- generating the request signal (20) depending on a maximum power feedback signal (23) representing a maximum electric power feedback to a battery (5) connectable to the DC link (4).

## Patentansprüche

1. Wechselrichteranordnung (2) für eine elektrische Maschine (3), Folgendes umfassend:
- einen Gleichspannungs-Zwischenkreis (4),
- einen ersten Leistungsabschnitt (8), der ausgebildet ist, um den an den Gleichspannungs-Zwischenkreis (4) gelieferten Strom in einen ersten mehrphasigen Wechselstrom (10) für ein erstes Wicklungssystem (16) der elektrischen Maschine (3) umzuwandeln,
- einen zweiten Leistungsabschnitt (9), der ausgebildet ist, um den an den Gleichspannungs-Zwischenkreis (4) gelieferten Strom in einen zweiten mehrphasigen Wechselstrom (12) für ein zweites Wicklungssystem (17) der elektrischen Maschine (3) umzuwandeln,
- eine erste Steuereinheit (19), die ausgebildet ist, um bei Empfangen eines Anforderungssignals (20) den ersten Leistungsabschnitt (8) so zu steuern, dass er den ersten mehrphasigen Wechselstrom (10) bereitstellt, der ein Drehmoment in einer ersten Richtung verursacht, und den zweiten Leistungsabschnitt (9) so zu steuern, dass er den zweiten mehrphasigen Wechselstrom (12) bereitstellt, der ein Drehmoment in einer zweiten Richtung verursacht, die der ersten Richtung entgegengesetzt ist, und
- eine zweite Steuereinheit (21), die ausgebildet ist, um das Anforderungssignal (20) zu erzeugen;
wobei die zweite Steuereinheit (21) ausgebildet ist, um
- einen Fehlerzustand der Wechselrichteranordnung (2) und/oder der elektrischen Maschine (3) zu erkennen und das Anforderungssignal (20) beim Erkennen des Fehlerzustands zu erzeugen, wobei die Wechselrichteranordnung ausgebildet ist, einen Glättungskondensator (7) des Gleichspannungs-Zwischenkreises (4) zu entladen, wenn die mehrphasigen Wechselströme (11, 12) bereitgestellt werden, die die Drehmomente in entgegengesetzten Richtungen verursachen, und/oder
- das Anforderungssignal (20) in Abhängigkeit von einem Maximalleistungs-Rückkopplungssignal (23) zu erzeugen, das eine maximale elektrische Leistungsrückkopplung zu einer mit dem Gleichspannungs-Zwischenkreis (4) verbindbaren Batterie (5) darstellt.

2. Wechselrichteranordnung nach Anspruch 1, wobei die zweite Steuereinheit (21) ausgebildet ist, das Anforderungssignal (20) in Abhängigkeit von einem Berechtigungssignal (24) zu erzeugen, das anzeigt, dass die Erzeugung des Anforderungssignals (20) berechtigt ist.

3. Wechselrichteranordnung nach Anspruch 1 oder 2, wobei die zweite Steuereinheit (21) ausgebildet ist, um das Anforderungssignal ferner in Abhängigkeit von einem Betriebsanforderungssignal (22) zu erzeugen, das ein von der elektrischen Maschine (3) bereitzustellendes Drehmoment oder eine von der elektrischen Maschine (3) bereitzustellende Drehzahl darstellt, und um
- eine Leistungsrückführung an die Batterie (5) zu schätzen, um ein tatsächliches Drehmoment der elektrischen Maschine (3) auf das durch das Betriebssignal (22) dargestellte Drehmoment oder auf ein von der elektrischen Maschine (3) bereitgestelltes Drehmoment zu reduzieren, wenn die durch das Betriebssignal (22) dargestellte Drehzahl bereitgestellt wird,
- einen Vergleich der geschätzten Leistungsrückführung mit der maximalen elektrischen Leistungsrückführung zur Batterie (5) durchzuführen, die durch das maximale Leistungsrückführungssignal (23) dargestellt wird, und
- das Anforderungssignal (20) basierend auf dem Vergleich zu erzeugen.

4. Anordnung (1), Folgendes umfassend:
- eine elektrische Maschine (3), umfassend einen Rotor (14) und einen Stator (15) mit einem ersten Wicklungssystem (16) und einem zweiten Wicklungssystem (17), das von dem ersten Wicklungssystem (16) getrennt ist, und
- eine Wechselrichteranordnung (2) nach einem der Ansprüche 1 bis 3.

5. Anordnung nach Anspruch 4, wobei die elektrische Maschine (3) Teil eines Antriebsstrangs (26) eines Fahrzeugs (25) ist oder als solcher ausgebildet ist.

6. Anordnung nach Anspruch 5, bei der die Wechselrichteranordnung (2) ausgebildet ist, mit einer Steuervorrichtung (27) des Fahrzeugs (25) zur Datenübertragung gekoppelt zu werden.

7. Anordnung nach Anspruch 6, wobei die Steuervorrichtung (27) ausgebildet ist, einen Fehlerzustand des Fahrzeugs (25) zu erkennen und bei Erkennen des Fehlerzustands das Anforderungssignal (20) zum Entladen des oder eines Glättungskondensators (7) des Gleichspannungs-Zwischenkreises (4) bereitzustellen.

8. Anordnung nach Anspruch 6 oder 7, wenn sie von Anspruch 2 abhängt, darüber hinaus umfassend eine Kupplung (28), und wobei das Berechtigungssignal (24) empfangen wird, wenn erkannt wird, dass die Kupplung (28) geöffnet werden soll oder dass die elektrische Maschine (3) zum Erreichen einer Synchronisationsgeschwindigkeit gebremst werden muss.

9. Anordnung nach Anspruch 8, umfassend ein Getriebe (29), das über die Kupplung (28) mit der elektrischen Maschine (3) koppelbar ist, oder wobei der Antriebsstrang (26) einen Verbrennungsmotor (31) umfasst, wobei die elektrische Maschine (3) über die Kupplung (28) mit einer mechanischen Last (30) koppelbar ist.

10. Anordnung (1), Folgendes umfassend:
- eine elektrische Maschine (3), die Teil eines Antriebsstrangs (26) eines Fahrzeugs (25) ist oder als solcher ausgebildet ist und einen Rotor (14) und einen Stator (15) mit einem ersten Wicklungssystem (16) und einem zweiten Wicklungssystem (17), das von dem ersten Wicklungssystem (16) getrennt ist, umfasst und
- eine Wechselrichteranordnung (2), die ausgebildet ist, um mit einer Steuervorrichtung (27) des Fahrzeugs (25) zur Datenübertragung gekoppelt zu werden, und Folgendes umfasst: einen Gleichspannungs-Zwischenkreis (4) mit einem Glättungskondensator (7), einen ersten Leistungsabschnitt (8), der ausgebildet ist, um dem Gleichspannungs-Zwischenkreis (4) zugeführten Strom in einen ersten Mehrphasen-Wechselstrom (10) für das erste System (16) umzuwandeln, einen zweiten Leistungsabschnitt (9), der ausgebildet ist, um den dem Gleichspannungs-Zwischenkreis (4) zugeführten Strom in einen zweiten Mehrphasen-Wechselstrom (12) für das zweite System (17) umzuwandeln, und eine Steuereinheit (19), die zum Steuern ausgebildet ist, beim Empfangen eines Anforderungssignals (20) den ersten Leistungsabschnitt (8) so zu steuern, dass er den ersten mehrphasigen Wechselstrom (10) bereitstellt, der ein Drehmoment in einer ersten Richtung verursacht, und den zweiten Leistungsabschnitt (9) so zu steuern, dass er den zweiten mehrphasigen Wechselstrom (12) bereitstellt, der ein Drehmoment in einer zweiten Richtung verursacht, die der ersten Richtung entgegengesetzt ist,
wobei die Steuervorrichtung (27) ausgebildet ist, um einen Fehlerzustand des Fahrzeugs (25) zu erkennen und das Anforderungssignal (20) beim Erkennen des Fehlerzustands zum Entladen des Glättungskondensators (7) bereitzustellen.

11. Anordnung nach einem der Ansprüche 4 bis 10, wobei das erste Wicklungssystem (16) auf einer Seite einer sich in axialer und radialer Richtung erstreckenden Schnittebene (18) angeordnet ist und wobei das zweite Wicklungssystem (17) auf der anderen zweiten Seite der Schnittebene (18) angeordnet ist.

12. Verfahren zum Betreiben einer elektrischen Maschine (3) durch eine Wechselrichteranordnung (2), wobei die Wechselrichteranordnung (2) Folgendes umfasst: einen Gleichspannungs-Zwischenkreis (4) mit einem Glättungskondensator (7), einen ersten Leistungsabschnitt (8), der ausgebildet ist, um den dem Gleichspannungs-Zwischenkreis (4) zugeführten Strom in einen ersten Mehrphasen-Wechselstrom (10) für ein erstes Wicklungssystem (16) der elektrischen Maschine (3) umzuwandeln, einen zweiten Leistungsabschnitt (9), der ausgebildet ist, um den an den Gleichspannungs-Zwischenkreis (4) gelieferten Strom in einen zweiten Mehrphasen-Wechselstrom (12) für ein zweites Wicklungssystem (17) der elektrischen Maschine (3) umzuwandeln, eine erste Steuereinheit (19),
wobei das Verfahren Folgendes umfasst:
- Steuern, mittels der Steuereinheit (19) nach Empfangen eines Anforderungssignals (20), des ersten Leistungsabschnitts (8), um den ersten mehrphasigen Wechselstrom (10) bereitzustellen, der ein Drehmoment in einer ersten Richtung verursacht,
- Steuern, mittels der ersten Steuereinheit (19) nach Empfangen des Anforderungssignals (20), des zweiten Leistungsabschnitts (9), um den zweiten mehrphasigen Wechselstrom (12) bereitzustellen, der ein Drehmoment in einer zweiten Richtung verursacht, die der ersten Richtung entgegengesetzt ist, wodurch in der elektrischen Maschine (3) gespeicherte Energie abgeleitet wird, wobei das Verfahren ferner Folgendes umfasst:
- die folgenden Schritte, die von einer Steuervorrichtung (27) eines Fahrzeugs (25) ausgeführt werden, die mit der Wechselrichteranordnung (2) zur Datenübertragung gekoppelt ist: Erkennen eines Fehlerzustands eines Fahrzeugs (25) und Bereitstellen des Anforderungssignals (20) zum Entladen des Glättungskondensators (7) beim Erkennen des Fehlerzustands, wobei die elektrische Maschine (3) Teil eines Antriebsstrangs (26) des Fahrzeugs (25) ist und einen Rotor (14) und einen Stator (15) mit einem ersten Wicklungssystem (16) und einem zweiten Wicklungssystem (17) umfasst, das von dem ersten Wicklungssystem (16) getrennt ist,
und/oder
einen oder beide der folgenden Schritte, die von einer zweiten Steuereinheit (21) der Wechselrichteranordnung (2) ausgeführt werden:
- Erkennen eines Fehlerzustands der Wechselrichteranordnung (2) und/oder der elektrischen Maschine (3) und Erzeugen des Anforderungssignals (20) beim Erkennen des Fehlerzustands, wobei die Wechselrichteranordnung (2) ausgebildet ist, den Glättungskondensator (7) des Gleichspannungs-Zwischenkreises (4) zu entladen, wenn die mehrphasigen Wechselströme (11, 12) bereitgestellt werden, die die Drehmomente in entgegengesetzten Richtungen verursachen;
- Erzeugen des Anforderungssignals (20) in Abhängigkeit von einem Maximalleistungs-Rückkopplungssignal (23), das eine maximale elektrische Leistungsrückkopplung zu einer mit dem Gleichspannungs-Zwischenkreis (4) verbindbaren Batterie (5) darstellt.

## Revendications

1. Ensemble onduleur (2) pour une machine électrique (3), comprenant
- une liaison CC (4),
- une première section de puissance (8) configurée pour convertir la puissance fournie à la liaison CC (4) en un premier courant CA polyphasé (10) pour un premier système de bobinage (16) de la machine électrique (3),
- une deuxième section de puissance (9) configurée pour convertir la puissance fournie à la liaison CC (4) en un deuxième courant CA polyphasé (12) pour un deuxième système de bobinage (17) de la machine électrique (3),
- une première unité de commande (19) qui est configurée pour commander, lors de la réception d'un signal de demande (20), la première section de puissance (8) pour qu'elle fournisse le premier courant CA polyphasé (10) provoquant un couple dans une première direction et la deuxième section de puissance (9) pour qu'elle fournisse le deuxième courant CA polyphasé (12) provoquant un couple dans une deuxième direction opposée à la première direction et
- une deuxième unité de commande (21) qui est configurée pour générer le signal de demande (20) ;
la deuxième unité de commande (21) étant configurée pour
- détecter un état de défaillance de l'ensemble onduleur (2) et/ou de la machine électrique (3) et générer le signal de demande (20) lors de la détection de l'état de défaillance, l'ensemble onduleur étant configuré pour décharger un condensateur de lissage (7) de la liaison CC (4) lors de la fourniture des courants CA polyphasés (11, 12) provoquant les couples dans des directions opposées
et/ou
- générer le signal de demande (20) en fonction d'un signal de retour de puissance maximal (23) représentant un retour de puissance électrique maximal vers une batterie (5) pouvant être connectée à la liaison CC (4).

2. Ensemble onduleur selon la revendication 1, dans lequel la deuxième unité de commande (21) est configurée pour générer le signal de demande (20) en fonction d'un signal d'autorisation (24) indiquant que la génération du signal de demande (20) est autorisée.

3. Ensemble onduleur selon la revendication 1 ou 2, dans lequel la deuxième unité de commande (21) est configurée pour générer le signal de demande en fonction en outre d'un signal de demande d'opération (22) représentant un couple à fournir par la machine électrique (3) ou une vitesse de rotation à fournir par la machine électrique (3) et pour
- estimer un retour de puissance vers la batterie (5) pour réduire un couple réel de la machine électrique (3) au couple représenté par le signal opérationnel (22) ou à un couple fourni par la machine électrique (3) lorsque la vitesse de rotation représentée par le signal opérationnel (22) est fournie,
- exécuter une comparaison du retour de puissance estimé au retour de puissance électrique maximal vers la batterie (5) représentée par le signal de retour de puissance maximal (23) et
- générer le signal de demande (20) sur la base de la comparaison.

4. Agencement (1) comprenant :
- une machine électrique (3), comprenant un rotor (14) et un stator (15) ayant un premier système de bobinage (16) et un deuxième système de bobinage (17) qui est distinct du premier système de bobinage (16) et
- un ensemble onduleur (2) selon l'une quelconque des revendications 1 à 3.

5. Agencement selon la revendication 4, dans lequel la machine électrique (3) fait partie de la chaîne cinématique (26) d'un véhicule (25) ou est adaptée pour en faire partie.

6. Agencement selon la revendication 5, dans lequel l'ensemble onduleur (2) est configuré pour être couplé à un dispositif de commande (27) du véhicule (25) pour le transfert de données.

7. Agencement selon la revendication 6, dans lequel le dispositif de commande (27) est configuré pour détecter un état de défaillance du véhicule (25) et produire le signal de demande (20) lors de la détection de l'état de défaillance pour décharger le ou un condensateur de lissage (7) de la liaison CC (4).

8. Agencement selon la revendication 6 ou 7, lorsqu'elle dépend de la revendication 2, comprenant en outre un embrayage (28), et dans lequel le signal d'autorisation (24) est reçu lors de la détection du fait que l'embrayage (28) doit être ouvert ou que la machine électrique (3) doit être freinée pour atteindre une vitesse de synchronisation.

9. Agencement selon la revendication 8, comprenant une boîte de vitesse (29) pouvant être couplée à la machine électrique (3) via l'embrayage (28) ou dans lequel la chaîne cinématique (26) comprend un moteur à combustion (31), la machine électrique (3) pouvant être couplée à une charge mécanique (30) via l'embrayage (28).

10. Agencement (1) comprenant :
- une machine électrique (3) qui fait partie de la chaîne cinématique (26) d'un véhicule (25) ou qui est adaptée pour en faire partie et qui comprend un rotor (14) et un stator (15) ayant un premier système de bobinage (16) et un deuxième système de bobinage (17) qui est distinct du premier système de bobinage (16) et
- un ensemble onduleur (2) configuré pour être couplé à un dispositif de commande (27) du véhicule (25) pour le transfert de données et comprenant : une ligne CC (4) ayant un condensateur de lissage (7), une première section de puissance (8) configurée pour convertir la puissance fournie à la liaison CC (4) en un premier courant CA polyphasé (10) pour le premier système de bobinage (16), une deuxième section de puissance (9) configurée pour convertir la puissance fournie à la liaison CC (4) en un deuxième courant CA polyphasé (12) pour le deuxième système de bobinage (17) et une unité de commande (19) qui est configurée pour commander, lors de la réception d'un signal de demande (20), la première section de puissance (8) pour qu'elle fournisse le premier courant CA polyphasé (10) provoquant un couple dans une première direction et la deuxième section de puissance (9) pour qu'elle fournisse le deuxième courant CA polyphasé (12) provoquant un couple dans une deuxième direction opposée à la première direction,
le dispositif de commande (27) étant configuré pour détecter un état de défaillance du véhicule (25) et produire le signal de demande (20) lors de la détection de l'état de défaillance pour décharger le condensateur de lissage (7).

11. Agencement selon l'une quelconque des revendications 4 à 10, dans lequel le premier système de bobinage (16) est disposé d'un côté d'un plan de coupe (18) s'étendant dans une direction axiale et radiale et dans lequel le deuxième système de bobinage (17) est disposé de l'autre côté du plan de coupe (18).

12. Procédé d'actionnement d'une machine électrique (3) par un ensemble onduleur (2), l'ensemble onduleur (2) comprenant une liaison CC (4) ayant un condensateur de lissage (7), une première section de puissance (8) configurée pour convertir la puissance fournie à la liaison CC (4) en un premier courant CA polyphasé (10) pour un premier système de bobinage (16) de la machine électrique (3), une deuxième section de puissance (9) configurée pour convertir la puissance fournie à la liaison CC (4) en un deuxième courant CA polyphasé (12) pour un deuxième système de bobinage (17) de la machine électrique (3), une première unité de commande (19),
le procédé comprenant :
- la commande, au moyen de l'unité de commande (19), lors de la réception d'un signal de demande (20), de la première section de puissance (8) pour qu'elle fournisse le premier courant CA polyphasé (10) provoquant un couple dans une première direction,
- la commande, au moyen de la première unité de commande (19), lors de la réception du signal de demande (20), de la deuxième section de puissance (9) pour qu'elle fournisse le deuxième courant CA polyphasé (12) provoquant un couple dans une deuxième direction opposée à la première direction, l'énergie stockée dans la machine électrique (3) étant dissipée,
le procédé comprenant en outre
- les étapes suivantes exécutées par un dispositif de commande (27) d'un véhicule (25) couplé à l'ensemble onduleur (2) pour un transfert de données : détection d'un état de défaillance d'un véhicule (25) et production, lors de la détection de l'état de défaillance, du signal de demande (20) pour décharger le condensateur de lissage (7), la machine électrique (3) faisant partie de la chaîne cinématique (26) du véhicule (25) et comprenant un rotor (14) et un stator (15) ayant le premier système de bobinage (16) et le deuxième système de bobinage (17) qui est distinct du premier système de bobinage (16),
et/ou
une ou deux des étapes suivantes, exécutées par une deuxième unité de commande (21) de l'ensemble onduleur (2) :
- détection d'un état de défaillance de l'ensemble onduleur (2) et/ou de la machine électrique (3) et génération du signal de demande (20) lors de la détection de l'état de défaillance, l'ensemble onduleur (2) étant configuré pour décharger un condensateur de lissage (7) de la liaison CC (4) lors de la fourniture des courants CA polyphasés (11, 12) provoquant les couples dans des directions opposées ;
- génération du signal de demande (20) en fonction d'un signal de retour d'énergie maximal (23) représentant un retour de puissance électrique maximal vers une batterie (5) pouvant être connectée à la liaison CC (4).
